# FASCICULE DE BREVET EUROPEEN

(11) **EP 1 011 237 B1**
(45) Date de publication et mention de la délivrance du brevet: **17.11.2004**
(21) Numéro de dépôt: 98403132.8
(22) Date de dépôt: 11.12.1998
(51) Int. Cl.: H04L 29/06

(54) **Contrôleur de protocole de transmission de données numériques hdlc**
Steuerung des Protokolls zur Übertragung von digitalen HDLC-Daten
Protocol controller for the transmission of HDLC digital data

(43) Date de publication de la demande: 21.06.2000
(73) Titulaire: T.Sqware SA, 78284 Guyancourt Cedex (FR)
(72) Inventeur: Douady, César, 75006 Paris (FR); Boucard, Philippe, 78150 Le Chesnay (FR)
(74) Mandataire: Fréchède, Michel

(56) Documents cités:
- EP-A- 0 447 053
- US-A- 5 056 084
- US-A- 5 144 623
- US-A- 5 444 704

## Description

A l'heure actuelle, les informations ou données numériques sont transmises à partir d'un processus de transmission par multiplexage temporel TDM (pour *Time Division Multiplexing*, en langage anglo-saxon).

De manière pratique, un tel processus consiste en fait à multiplexer temporellement un nombre déterminé N de voies ou canaux temporels, ce multiplexage étant réalisé à partir d'une impulsion de synchronisation délivrée toutes les 125 µs.
En Europe, le nombre de canaux temporels est fixé à N = 32, au cours de chacun desquels un message élémentaire comportant n bits, par exemple un octet n = 8, peut être transmis. Chaque octet successif définit en fait un canal après chaque impulsion de synchronisation. Pour transmettre 32 canaux, soit une trame, il est donc nécessaire d'engendrer 256 cycles d'horloge, un bit étant transmis à chaque cycle d'horloge, soit une fréquence de 2,048 MHz.
Aux Etats-Unis, le nombre de voies ou canaux est limité à N = 24 et pour transmettre une trame, il est nécessaire d'engendrer 192 cycles d'horloge, soit une fréquence de 1,544 MHz compte tenu de l'adjonction d'un bit de trame. Selon les applications envisagées, chaque canal temporel est susceptible de transporter des données brutes telles que des données d'échantillons audiofréquence numérisées ou des données numérisées formatées conformément au protocole HDLC (H.D.L.C. pour *High Data Link Control* en langage anglo-saxon).

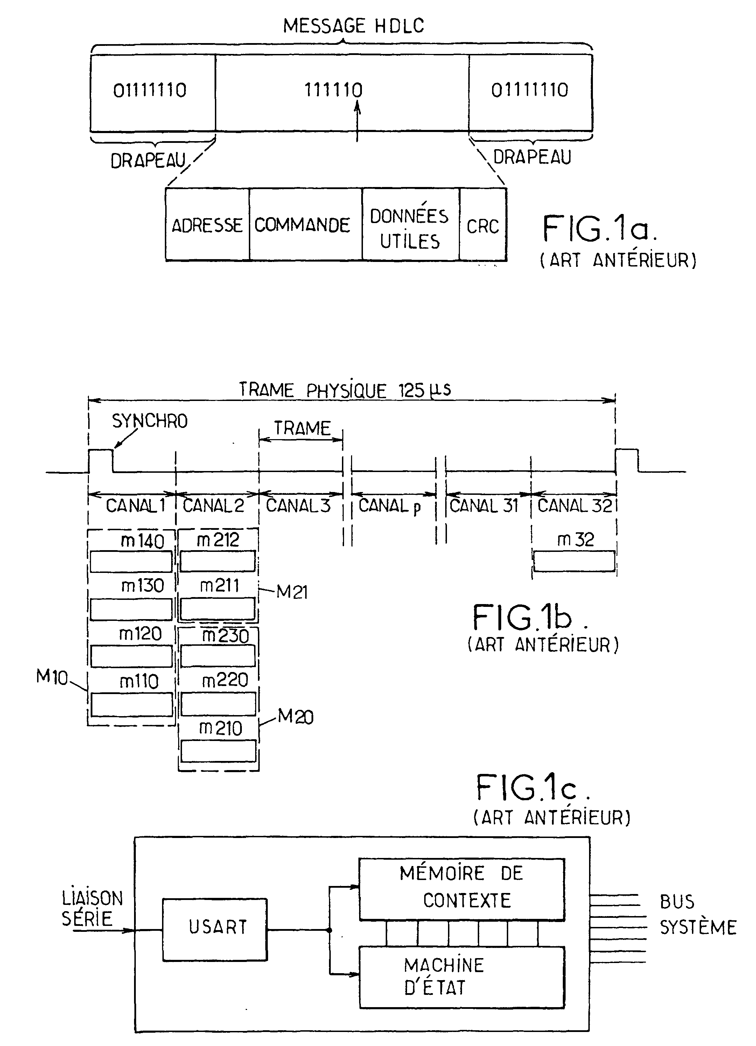

Ce protocole consiste, ainsi que décrit en relation avec la figure 1a, à formater ces données sous forme de messages HDLC, chaque message élémentaire ou trame comparenant un nombre indéterminé d'éléments binaires qui, dans certains cas, peut être un multiple d'une dimension de caractère, un octet par exemple. Chaque message élémentaire comprend :
- un drapeau de début et de fin de message élémentaire constituant chacun une séquence de délimitation de trame ;
- un champ d'adresse de la station secondaire à laquelle le message élémentaire est destiné, l'adresse étant codée sur 8 bits et permettant d'identifier la ou les stations secondaires impliquées dans l'échange d'information considéré ;
- un champ de commande, contenant des commandes et des réponses, ainsi que les numéros de séquence codés sur 8 bits. Ce champ est utilisé par la station primaire pour indiquer à la station secondaire concernée quelle opération doit être réalisée et par cette station secondaire pour répondre à cette station primaire ;
- un champ d'informations ou de données utiles pouvant se composer de n'importe quelle suite d'éléments binaires. L'information peut utiliser une structure de caractères appropriée telle que des octets. Afin d'assurer la transparence et la cohérence de la transmission, des règles impératives de codage doivent être respectées ;
- un champ de contrôle, code de vérification d'erreur, constitué, soit par une suite de 16 éléments binaires obtenue à partir d'un polynôme générateur x¹⁶ + x¹² + x⁵ + 1, soit d'une suite de 32 éléments binaires obtenue à partir d'un polynôme générateur x³² + x²⁶ + x²³ + x²² + x¹⁶ + x¹² + x¹¹ + x¹⁰ + x⁸ + x⁷ + x⁵ + x⁴ + x² + x + 1.

L'émetteur doit examiner le contenu de chaque message élémentaire entre deux drapeaux comportant l'ensemble des champs précités, et doit insérer un élément 0 après toute séquence de cinq 1 consécutifs, afin de vérifier qu'une séquence relative à un fanion n'est pas reproduite. Le récepteur doit examiner le contenu du message et doit éliminer tout élément binaire 0 qui suit immédiatement cinq éléments binaires 1 consécutifs.

Les adresses, les commandes, les réponses et les numéros de séquences doivent être transmis avec l'élément de poids le plus faible en premier. L'ordre des éléments transmis dans un champ d'information n'est pas fixé. Le code de vérification d'erreur doit être transmis en commençant par le coefficient du terme le plus élevé. Le remplissage de temps entre messages élémentaires est réalisé en transmettant, soit des drapeaux continus, soit un minimum de sept éléments binaires à 1 continus, ou encore une combinaison des deux. L'utilisation des drapeaux et des séquences de 1 permet de définir les états de la voie de transmission.

Un message élémentaire est considéré comme incorrect lorsqu'il n'est pas correctement limité par deux fanions ou lorsqu'il est trop court, inférieur par exemple à 32 éléments binaires entre drapeaux. Les messages élémentaires sont ignorés. Ainsi, un message élémentaire qui se termine par un nombre de 1 consécutifs supérieur à 7 est ignoré. Une méthode permettant d'invalider, et donc de faire abandonner un message élémentaire, consiste par exemple à émettre 8 éléments binaires 1 consécutifs.

Normalement, le champ d'adresse est codé sur un octet, les 256 combinaisons d'adresse étant disponibles. Cependant, par convention entre partenaires à la transaction, le champ d'adresse peut être étendu en réservant le premier élément binaire de chaque octet d'adresse, qui est alors fixé à zéro, pour indiquer que l'octet suivant est une extension de l'adresse de base. Le format des octets d'adresse étendus est le même que celui de l'octet d'adresse de base et le champ d'adresse peut être étendu successivement. Lorsque des extensions d'adresse sont utilisées, la présence d'un élément binaire 1 dans le premier élément binaire de l'octet d'adresse de base indique l'utilisation d'un seul octet d'adresse. L'adressage étendu peut être compris entre 1 et 128 octets.
Chaque drapeau est constitué par un bit à la valeur zéro, six bits à la valeur 1 et un bit à la valeur zéro. A l'émission, un bloc de données constitutif des données utiles à transmettre est sélectionné, le code de vérification d'erreur CRC est calculé, le bloc de données est soumis ensuite à un formatage HDLC consistant à repérer, dans ce bloc de données, toute suite continue de 5 bits à la valeur 1, et à rajouter un bit à la valeur zéro à cette suite continue.
Cette opération, de type transcodage, permet de *"craquer"* tout motif de bits, contenu dans les données et formé par une suite identique à celle d'un drapeau, et d'éviter ainsi la confusion d'un tel motif avec un drapeau. Les données utiles formatées, le code de vérification d'erreur CRC et les drapeaux sont ensuite concaténés pour former le message élémentaire HDLC.
A la réception, les opérations inverses sont réalisées, un code de vérification d'erreur étant recalculé sur les données utiles reçues, après suppression des bits à la valeur zéro rajoutés à l'émission. Les codes de vérification d'erreur sont comparés afin de permettre de valider ou non la transmission du message élémentaire HDLC.

Les opérations précitées sont mises en oeuvre, tant à l'émission qu'à la réception, au moyen de contrôleurs HDLC. Ce type de circuit permet donc, à la réception, d'extraire d'un flot de données TDM les messages élémentaires HDLC, de valider ces derniers selon le protocole précité et de délivrer au système utilisateur les données utiles reçues, ainsi que réciproquement, à l'émission, à partir de données mémorisées ou transmises, de constituer les messages élémentaires HDLC et d'insérer ces derniers dans le flot TDM.
Chaque canal temporel 1 à 32, tel que représenté en figure 1b, permet donc la transmission de messages élémentaires HDLC successifs m₁₁₀ à m₁₄₀, m₂₁₀ à m₂₃₀, m₂₁₁ à m₂₁₂, constitutifs de messages complets ou transactions M₁₀, M₂₀ et M₂₁ respectivement.

Une contrainte majeure de mise en oeuvre du protocole de transmission de données HDLC consiste dans le fait que pour décoder les données utiles formatées, il est nécessaire de sauvegarder le contexte des messages élémentaires HDLC précédents. A titre d'exemple, afin de contrôler le code de vérification d'erreur, il est nécessaire d'effectuer le calcul de ce code sur les données utiles reçues au fur et à mesure de l'arrivée des messages élémentaires successifs m₁₁₀, m₂₂₀ et suivants, constitutifs de chaque trame, avant de comparer le code CRC calculé au code CRC reçu.
Dans le cas du protocole HDLC mis en oeuvre sur un flot de données TDM, il est donc nécessaire de conserver en permanence N contextes de code CRC, un pour chaque canal temporel.

Les contrôleurs HDLC actuellement disponibles dans le commerce, tel que le contrôleur HDLC portant la référence 29c94 commercialisé par la Société de droit français MATRA HARRIS SEMICONDUCTOR, Route de Gachet, La Chantrerie, 44300 NANTES, sont constitués par des machines d'état câblées ou microprogrammées dédiées, lesquelles, afin de générer les données de contexte précitées, doivent comporter des plans mémoire de taille suffisante. Ces plans mémoire sont intégrés au contrôleur pour des raisons de rapidité d'accès à ces données, et, en définitive, de temps de calcul.

Pour la mise en oeuvre de tels contrôleurs, pour N = 32 par exemple, de tels contrôleurs tels que représentés en figure 1c comprenant à partir d'une liaison série recevant par exemple le flot TDM, un module émetteur-récepteur universel synchrone-asynchrone USART, la machine d'état et les mémoires de contextes, les données utiles étant délivrées au système utilisateur au moyen d'une liaison par BUS, le traitement complet pour une trame, soit 32 canaux temporels, implique celui de chaque canal temporel en une durée égale à 3,9 µs. Le traitement des 32 canaux temporels est ainsi effectué en parallèle, du point de vue macroscopique, par la machine d'état à partir de la mémoire de contexte qui garde trace des codes de vérification d'erreur reçus. Durant la durée de 3,9 µs précitée, il faut donc, pour un canal temporel, récupérer le contexte, effectuer les calculs précités et transmettre les statuts, et sauvegarder le contexte.

La présente invention a pour objet d'assurer une indépendance relative entre le flot des données TDM et le calcul réalisé, afin de minimiser le coût système par une utilisation de plans mémoire standard, mémoires dynamiques.

Un autre objet de la présente invention est en outre d'utiliser les plans mémoire standard précités pour sérialiser le traitement des messages élémentaires HDLC.

Le document US-5 056 084 décrit un système similaire. Toutefois, il ne divulgue pas un traitement en série des messages HDLC ni, surtout, des moyens spécifiques pour assurer un tel traitement en série.

Un autre objet de la présente invention est enfin de permettre la mise en oeuvre du traitement du protocole HDLC au moyen d'un microprocesseur classique.

Le contrôleur de protocole de transmission de données numériques HDLC selon la revendication 1, objet de la présente invention, comprend un port d'entrée de ces données à partir d'un flot de données transmises selon un multiplexage temporel (TDM). Il est remarquable en ce qu'il comprend un module émetteur-récepteur universel synchrone-asynchrone (USART) interconnecté au port d'entrée, permettant à partir du flot de données (TDM) transmis la transmission parallèle de messages élémentaires constitutifs de N messages globaux. Une unité de mémorisation séquentielle des messages élémentaires transmis en parallèle par le module émetteur-récepteur universel (USART) est prévue. Un module de lecture et de traitement séquentiel des messages élémentaires mémorisés séquentiellement est prévu, chaque message élémentaire partie d'un message global étant traité selon un traitement série conforme au traitement HDLC.

Le contrôleur de protocole de transmission de données numériques HDLC, objet de la présente invention, trouve application à l'industrie des circuits intégrés, à partir de mémoires dynamiques et de microprocesseurs, sous forme de circuits intégrés, de type classique.

Il sera mieux compris à la lecture de la description et à l'observation des dessins ci-après dans lesquels, outre les figures 1a à 1c relatives à l'art antérieur,

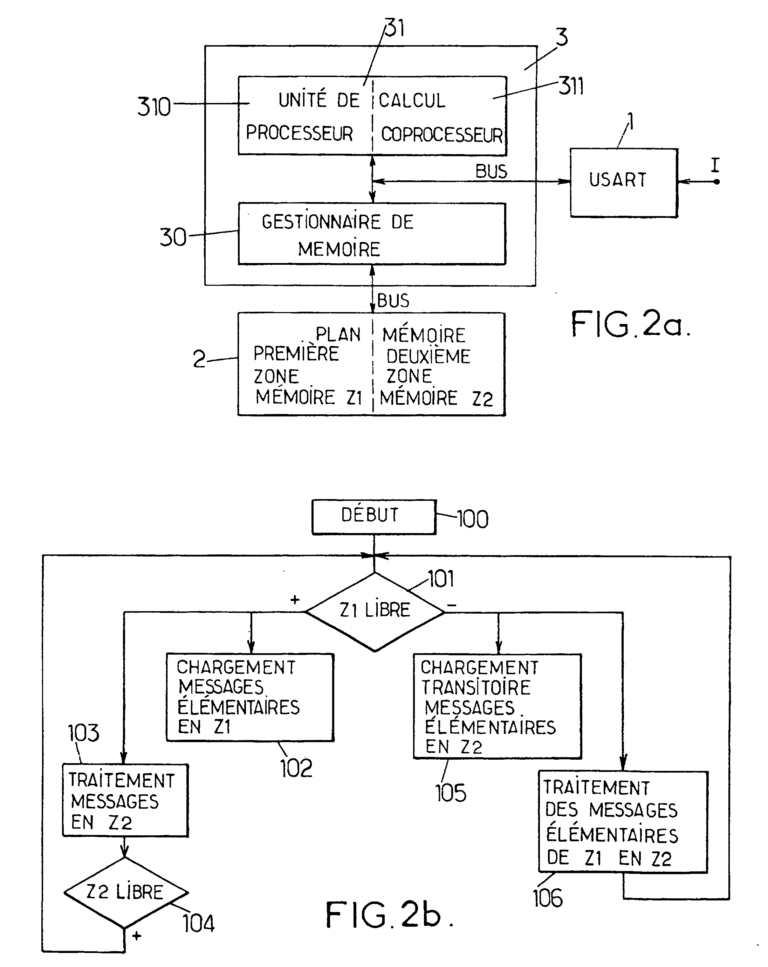

- la figure 2a représente un schéma illustratif de réalisation préférentielle du contrôleur de protocole HDLC, objet de la présente invention ;
- la figure 2b représente l'organigramme d'un programme de gestion du plan mémoire de type mémoire tampon circulaire.

Une description plus détaillée du protocole de transmission de données numériques HDLC conforme à l'objet de la présente invention sera maintenant donnée en liaison avec la figure 2a.

Ainsi que représenté sur la figure précitée, le contrôleur de protocole HDLC, objet de la présente invention, comprend un port d'entrée, noté I, des données numériques précitées à partir d'un flot de données transmises selon un multiplexage temporel TDM. Ce flot de données TDM comprend une pluralité de messages élémentaires successifs sur les N canaux temporels conformément au protocole HDLC précédemment décrit dans la description.

Selon une caractéristique particulièrement avantageuse du contrôleur objet de la présente invention, celui-ci comprend un module 1 émetteur-récepteur universel synchrone-asynchrone, USART, ce module étant interconnecté au port d'entrée I et permettant, à partir du flot de données TDM transmis, la transmission en parallèle de messages élémentaires tels que les messages m₁₁₀, m₂₂₀ représentés en figure 1b, ces messages élémentaires étant bien entendu constitutifs de N messages globaux.

Le contrôleur de protocole de transmission de données numériques HDLC, objet de la présente invention, comporte également un module 2 de mémorisation séquentielle des messages élémentaires précités, ces messages élémentaires, pour une trame HDLC, étant transmis en parallèle par le module émetteur-récepteur universel USART 1. On indique que ce module 1 est relié par une liaison par BUS au module de mémorisation 2.

En outre, le contrôleur de protocole HDLC, objet de la présente invention, comporte un module 3 de lecture et de traitement séquentiel des messages élémentaires mémorisés séquentiellement. Le module 3 de lecture et de traitement séquentiel est interconnecté à la liaison par BUS précitée, d'une part, au module 1 USART, et, d'autre part, au module 2 de mémorisation séquentielle.

De manière plus spécifique, on indique que chaque message élémentaire mémorisé dans le module de mémorisation séquentielle 2 est lu par le module de lecture et de traitement séquentiel 3, chacun de ces messages élémentaires, partie d'un message global, étant alors traité selon un traitement successif, donc de type série, conformément au protocole HDLC.

A titre d'exemple non limitatif, on comprend que, à la réception par exemple, chaque message élémentaire est appelé en lecture par le module de lecture et de traitement séquentiel 3, les opérations de déformatage, c'est-à-dire de suppression des bits à la valeur zéro insérée à l'émission dans les données utiles, étant réalisées par cette même unité de lecture et de traitement séquentiel 3, puis de calcul du code de vérification d'erreur CRC sur ces données déformatées, puis de comparaison du code de vérification d'erreur calculé avec le code de vérification d'erreur reçu correspondant.

On comprend en particulier que cette opération réalisée pour un message élémentaire donné est ensuite exécutée pour chacun des messages successifs mémorisés dans l'unité de mémorisation 2.

D'une manière générale, on indique que le module de lecture et de traitement séquentiel 3 peut comprendre avantageusement une unité de calcul 31, laquelle est bien entendu interconnectée au module de mémorisation 2 par la liaison par BUS précitée par l'intermédiaire d'un circuit gestionnaire de mémoire 30.

De préférence, ainsi que représenté également en figure 2a, l'unité de calcul 31 peut comporter un processeur classique, noté 310, auquel est ajouté un coprocesseur 311 constituant en fait un module de traitement spécialisé, destiné à la réalisation de tâches spécifiques au traitement des messages élémentaires mémorisés dans l'unité de mémoristation 2. Ces tâches spécifiques sont, par exemple, des tâches spécifiques du protocole HDLC telles que la mise en oeuvre du code de vérification d'erreur CRC de transmission, et, naturellement, le transcodage des motifs HDLC pour effectuer le formatage des données utiles respectivement le déformatage de ces données utiles lorsque le contrôleur de protocole HDLC, objet de la présente invention, est utilisé soit à l'émission, soit à la réception.

Alors que le processeur 310 peut être constitué par un processeur de type classique, c'est-à-dire finalement le microprocesseur du système utilisateur, le coprocesseur 311 peut être constitué par un coprocesseur dédié, c'est-à-dire un coprocesseur arithmétique muni d'une mémoire morte permettant d'effectuer les opérations classiques décrites précédemment dans le cadre de la mise en oeuvre du protocole HDLC.

De même, on indique que le module de mémorisation 2 peut être constitué par une mémoire vive, c'est-à-dire la mémoire dynamique du système utilisateur.

Ainsi qu'on l'a en outre représenté en figure 2a, on indique que le circuit gestionnaire de mémoire 30 permet d'assurer une gestion optimisée du module de mémorisation 2 constitué par un plan mémoire classique.

Le gestionnaire de mémoire 30 peut comporter un programme de gestion du plan mémoire 2, ce plan mémoire étant par exemple subdivisé en une première zone mémoire Z₁ et une deuxième mémoire Z₂. Le gestionnaire de mémoire 30 permet alors de gérer le plan mémoire 2 sous forme d'un tampon circulaire comportant la première zone de mémoire Z₁ et la première zone de mémoire Z₂.

La première zone de mémoire Z₁ est destinée à recevoir les messages élémentaires délivrés par l'unité d'émetteur-récepteur universel synchrone-asynchrone 1, et la deuxième zone mémoire Z₂ constituant en fait mémoire de travail permet au module 3 de lecture et de traitement d'effectuer le traitement série des messages élémentaires mémorisés précités, ce traitement correspondant au traitement selon le protocole HDLC.

A titre d'exemple non limitatif, suite à une étape d'initialisation notée DEBUT 100, la gestion du plan mémoire par le gestionnaire de mémoire 30 consiste, par exemple, suite à un test 101 sur le première zone de mémoire Z₁ déclarée libre, à effectuer en une étape 102 le chargement des messages élémentaires dans la première zone mémoire Z₁, le traitement des messages mémorisés en zone mémoire Z₁ étant réalisé en deuxième zone mémoire Z₂ séquentiellement à l'étape 103. Un test 104 permet de vérifier que la deuxième zone mémoire Z₂ est libre et de se ramener aux conditions initiales précédemment mentionnées. Dans le cas où le test 101 précédemment mentionné indique que la première zone mémoire n'est pas libre, c'est-à-dire que celle-ci a été totalement remplie par les messages élémentaires successifs, le test 104 étant positif, c'est-à-dire la deuxième zone mémoire Z₂ étant libre, un basculement intervient, le chargement de type transitoire des messages élémentaires étant effectué dans la deuxième zone mémoire Z₂ à l'étape 105. Parallèlement à l'étape 105 précitée, le traitement des messages élémentaires de la première zone mémoire Z₁ est effectué de façon à vider celle-ci, puis bien entendu celui des messages élémentaires mémorisés en deuxième zone mémoire Z₂ pour rendre celle-ci à nouveau libre. Les opérations 105 et 106 permettent de se ramener à la condition initiale. Le basculement du chargement des messages élémentaires entre la première et la deuxième zone mémoire Z₁, Z₂ est effectué ainsi lorsque la première zone mémoire Z₁ n'est pas libre et que la deuxième zone mémoire Z₂ est entièrement libre. En ce qui concerne la réalisation pratique du contrôleur de protocole de transmission de données numériques HDLC, objet de la présente invention, on indique que le processeur 310 et le coprocesseur 311 peuvent être constitués par des processeurs et coprocesseurs équipant les stations de travail SPARC. Dans ces conditions, on indique également que le plan mémoire utilisé, c'est-à-dire la zone mémoire de la mémoire vive utilisée, est relativement faible, ce plan mémoire consistant bien entendu en une zone mémoire adressable de la mémoire vive de la station de travail. On indique à titre d'exemple non limitatif que le plan mémoire nécessite une taille de l'ordre de 10 K octets par canal temporel du protocole HDLC.

On a ainsi décrit un contrôleur de protocole de transmission de données numériques HDLC particulièrement performant, dans la mesure où les contrôleurs de l'art antérieur mis en oeuvre à partir d'une machine d'état dédiée ont pu être simplifiés, ce qui bien entendu réduit le coût système en conséquence. En effet, la suppression du contrôleur proprement dit est remplacée par l'utilisation d'un plan mémoire standard de type DRAM et par une optimisation des ressources de calcul disponibles en utilisant notamment le processeur système standard, lequel, dans la mesure où celui-ci n'est pas saturé par le traitement de protocole HDLC, peut bien entendu réaliser d'autres tâches.

Enfin, dans une version optimale, l'adjonction d'un coprocesseur dédié aux tâches de gestion du protocole HDLC permet de rendre le système sensiblement indépendant du flux de données TDM.

## Revendications

1. Contrôleur de protocole de transmission de données numériques HDLC, comprenant un port d'entrée de ces données à partir d'un flot de données transmises selon un multiplexage temporel TDM de messages élémentaires sur une pluralité de N canaux et des moyens (1) émetteurs-récepteurs universels synchrone-asynchrone USART interconnectés audit port d'entrée, permettant à partir du flot de données TDM transmis, la transmission parallèle de messages élémentaires constitutifs de N messages globaux, **caractérisé en ce qu'**il comprend en outre :
- des moyens (2) de mémorisation séquentielle desdits messages élémentaires, transmis en parallèle par lesdits moyens émetteurs-récepteurs universels USART, lesdits moyens (2) de mémorisation étant gérés sous forme d'une mémoire tampon circulaire, comportant au moins :
. une première zone de mémoire (21), destinée à recevoir les messages élémentaires délivrés par les moyens émetteurs-récepteurs universels USART, et,
. une deuxième zone mémoire (22), mémoire de travail, permettant auxdits moyens de lecture et de traitement d'effectuer ledit traitement série des messages élémentaires mémorisés, selon le protocole HDLC, et
- des moyens (3) de lecture et de traitement séquentiel desdits messages élémentaires mémorisés séquentiellement, chaque message élémentaire partie d'un message global étant traité selon un traitement série conforme au protocole HDLC, lesdits moyens (3) de lecture et de traitement comportant en outre des moyens (311) de traitement spécialisés destinés à la réalisation de tâches spécifiques au traitement des messages élémentaires mémorisés, selon le protocole HDLC, ces tâches spécifiques comprenant la mise en oeuvre d'un code de vérification d'erreur de transmission, et le transcodage des motifs HDLC.

## Patentansprüche

1. Steuerung für ein HDLC-Protokoll zur Übertragung von digitalen Daten, umfassend ein Eingangsport dieser Daten aus einem Strom von Daten, die gemäß einem zeitlichen Multiplex TDM von elementaren Mitteilungen auf einer Vielzahl von N Kanälen übertragen werden, und universelle Synchron/Asynchron-Sender/Empfänger-Mittel (1), die mit dem Eingangsport verbunden sind, die ausgehend von dem übertragenen Strom von TDM-Daten die parallele Übertragung von elementaren Mitteilungen gestatten, die N Globalmitteilungen bilden, **dadurch gekennzeichnet, dass** sie außerdem umfasst:
- Mittel (2) zur sequentiellen Speicherung der elementaren Mitteilungen, die von den universellen Sender/Empfänger-Mitteln USART parallel übertragen werden, wobei die Speichermittel (2) in Form eines zirkularen Speicherpuffers ausgebildet verwaltet werden, mit mindestens:
. eine erste Speicherzone (21), die dafür bestimmt ist die elementaren Mitteilungen aufzunehmen, die von den universellen Sender/Empfänger-Mitteln USART geliefert werden, und
. eine zweite Speicherzone (22), welche ein Arbeitsspeicher ist, der es den Lese- und Verarbeitungsmitteln gestattet die Reihe der gespeicherten elementaren Mitteilung gemäß dem HDLC-Protokoll zu verarbeiten, und
- Mittel (3) zum Lesen und zur sequentiellen Verarbeitung der sequentiell gespeicherten elementaren Mitteilungen, wobei jede ein Teil einer globalen Mitteilung bildende elementare Mitteilung gemäß einer zum HDLC-Protokoll konformen Serienverarbeitung bearbeitet wird, wobei die Leseund Verarbeitungsmittel (3) außerdem spezialisierte Verarbeitungsmittel (311) umfassen, die zur Verwirklichung von speziellen Aufgaben bestimmt sind bei der Verarbeitung von gespeicherten elementaren Mitteilungen, gemäß dem HDLC-Protokoll, wobei die spezifischen Aufgaben die Verwirklichung eines Fehlerverifizierungscodes der Übertragung und einer Transcodierung von HDLC-Mustern umfassen.

## Claims

1. A HDLC digital data transmission protocol controller, including an input port for data from a data stream, transmitted using time-division multiplexing TDM of basic messages over a number of channels N, and universal synchronous-asynchronous receiver-transmitter USART means (1), interconnected to said input port, enabling parallel transmission of constituent basic messages of N global messages from a transmitted TDM data stream, **characterised in that** it further includes:
- sequential storage (2) of said basic messages, transmitted in parallel by said universal receiver-transmitter USART, said storage means (2) being managed in the form of a circular buffer memory, comprising at least:
- an initial storage area (21), intended to receive the basic messages supplied by the universal receiver-transmitter USART, and,
- a secondary storage area (22), working memory, allowing said means of reading and processing to carry out said serial processing of stored basic messages, according to the HDLC protocol, and
- means (3) of reading and sequentially processing said basic messages, stored sequentially, each basic message forming part of a global message subjected to serial processing in accordance with the HDLC protocol, said means (3) of reading and sequentially processing comprising in addition specialised processing means (311) intended for the carrying out of tasks specific to the processing of stored basic messages, according to the HDLC protocol, these specific tasks comprising the implementation of a transmission error verification code, and the transcoding of HDLC patterns.
